Europäisches Patentamt

European Patent Office

Office européen des brevets

(19)

(11) Veröffentlichungsnummer : **0 081 167**
**B1**

(12) # EUROPÄISCHE PATENTSCHRIFT

(45) Veröffentlichungstag der Patentschrift :
20.02.85

(21) Anmeldenummer : 82110965.9

(22) Anmeldetag : 27.11.82

(51) Int. Cl.⁴ : **B 05 C 15/00**, B 05 B 15/04

(54) Vorrichtung zur Spritzbehandlung, insbesondere zur Spritzlackierung von Gegenständen.

(30) Priorität : 03.12.81 DE 3147809

(43) Veröffentlichungstag der Anmeldung :
15.06.83 Patentblatt 83/24

(45) Bekanntmachung des Hinweises auf die Patenterteilung : 20.02.85 Patentblatt 85/08

(84) Benannte Vertragsstaaten :
CH DE FR GB IT LI SE

(56) Entgegenhaltungen :
DE-A- 2 823 958
DE-A- 2 930 080
DE-U- 8 115 387

(73) Patentinhaber : **Fritz Schäfer Gesellschaft mit beschränkter Haftung**
**Fritz-Schäfer-Strasse 20**
**D-5908 Neunkirchen (DE)**

(72) Erfinder : **Schäfer, Gerhard**
**Oberes Gerstenfeld 2**
**D-5908 Neunkirchen (DE)**

(74) Vertreter : **Müller, Gerd et al**
**Patentanwälte F.W. Hemmerich Gerd Müller,**
**Dipl.-Ing. D. Grosse Felix Pollmeier Hammerstrasse 2**
**D-5900 Siegen 1 (DE)**

**Beschreibung**

Die Erfindung betrifft eine Vorrichung zur Spritzbehandlung, insbesondere zur Spritzlackierung von Gegenständen mit einer sich quer zur Spritzrichtung erstreckenden Niederschlagsfläche für das an den Gegenständen vorbeitretende Spritzmedium (Overspray), mindestens einem Abstreifer zum Entfernen des Niederschlages von der Niederschlagsfläche und einer unterhalb der Niederschlagsfläche angeordneten Auffangwanne für das abgestreifte Spritzmedium.

Vorrichtungen dieser Gattung sind bekannt durch die DE-OS 28 23 958 und das DE-GM 81 15 387. Sie haben den Vorteil, daß mit ihrer Hilfe das ungenutzt an den zu behandelnden Gegenständen vorbeitretende Spritzmedium größtenteils aufgefangen und der Wiederverwendung zugeführt werden kann, so daß nicht nur Umweltbelastungen durch das Spritzmedium weitgehend vermieden sondern auch übermäßige Verluste wertvoller Materialien verhindert werden. Bei den bekannten Vorrichtungen zur Spritzbehandlung von Gegenständen sind jeder der im wesentlichen senkrecht orientierten Niederschlagsflächen außer den relativ dazu bewegbaren Abstreifern noch Benetzungsvorrichtungen, beispielsweise in Form einer Düsenreihe oder einer Überlaufrinne mit Kammleiste, zugeordnet, die dann in Benutzung genommen werden, wenn Spritzmedium zur Verarbeitung gelangt, welches flüchtige Bestandteile, beispielsweise Lösungsmittel, enthält, deren Verlust eine Konsistenz- bzw. Viskositätsänderung in dem von der Niederschlagsfläche aufgefangenen Overspray zur Folge hat. Da eine solche Konsistenz- bzw. Viskositätsänderung des Oversprays nicht nur das Abstreifen von der Niederschlagsfläche beeinträchtigt, sondern auch dessen anschließende Wiederverwendung erschwert, können durch die Benetzungsvorrichtung der Niederschlagsfläche die betreffenden flüchtigen Bestandteile, insbesondere Lösungsmittel, wenigstens in solcher Menge zugeführt werden, daß eine übermäßige Konsistenz- bzw. Viskositätsänderung des Oversprays nicht eintritt.

Nachteilig bei den gattungsgemäßen Vorrichtungen zur Spritzbehandlung von Gegenständen ist jedoch, daß nur derjenige Anteil des nicht zur Schichtbildung auf den Gegenständen beitragenden Spritzmediums bzw. Oversprays aufgefangen und der Wiederverwendung zugeführt werden kann, welcher die hinter den zu behandelnden Gegenständen liegende Niederschlagsfläche tatsächlich erreicht. Der vor dieser Niederschlagsfläche nach unten sinkende Anteil des ungenutzten Spritzmediums bzw. Oversprays geht jedoch, soweit er nicht unmittelbar in die Auffangwanne gelangt, in unerwünschter Weise für die Wiederverwendung verloren.

Zur Beseitigung dieses Nachteils ist durch die DE-OS 29 30 080 auch bereits eine Vorrichtung zur Spritzbehandlung von Gegenständen bekannt, die mit einem endlosen Band arbeitet, welches so geführt ist, daß es im wesentlichen L-förmig verläuft und dabei mit einem senkrechten Bandabschnitt und einem waagerechten Bandabschnitt eine Niederschlagsfläche für das Overspray bildet. Während der lotrechte Bandabschnitt den an den zu behandelnden Gegenständen vorbeitretenden Anteil des ungenutzten Spritzmediums übernimmt, fängt der waagerechte Bandabschnitt den unmittelbar nach unten fallenden Anteil des ungenutzten Spritzmediums auf.

Bei dieser bekannten Vorrichtung wird das endlose Band zur Entfernung des darauf gebildeten Niederschlages in seinem waagerechten Teilbereich durch ein Waschsystem geführt, welches mit einem in einer Wanne befindlichen, flüssigen Waschmedium arbeitet, das die gleichen Bestandteile wie das Spritzmedium enthält.

Abgesehen davon, daß eine derartige Vorrichtung zur Spritzbehandlung von Gegenständen nur dann einigermaßen wirksam arbeitet, wenn das im Waschsystem benutzte Waschmedium eine wesentlich andere Konsistenz, nämlich eine wesentlich geringere Viskosität als das in Benutzung befindliche Spritzmedium bzw. das sich bei dessen Verarbeitung bildende Overspray hat, liegt der weitere Nachteil vor, daß die besondere Art der Bandführung eine Bandumlenkrolle erfordert, die dauernd mit Overspray des Spritzmediums beaufschlagt wird, ohne daß sie mit dem Waschsystem zusammenarbeitet. Es wäre zwar denkbar, dieser Umlenkrolle einen besonderen Abstreifer und/oder eine Benetzungsvorrichtung zuzuordnen, die das auf ihr niederschlagende Overspray entfernt und beispielsweise an den waagerecht laufenden Bandabschnitt abgibt.

Der wesentliche Nachteil bei dieser bekannten Vorrichtung zur Spritzbehandlung von Gegenständen ist jedoch darin zu sehen, daß besondere Zusatzvorkehrungen getroffen werden müssen, die eine Viskositätsänderung des im Waschsystem verwendeten Waschmediums herbeiführen, bevor dieses als Spritzmedium wiederverwendet werden kann.

Die Erfindung bezweckt die Vermeidung der den bekannten Vorrichtungen zur Spritzbehandlung, insbesondere zur Spritzlackierung, von Gegenständen eigentümlichen Nachteile. Deshalb ist ihr das Ziel gesetzt, eine gattungsgemäße Vorrichtung zur Spritzbehandlung von Gegenständen zu schaffen, die nicht nur eine weitestgehende Rückgewinnung des aus dem Spritzmedium resultierenden Oversprays zuläßt, sondern zugleich auch dessen unmittelbare Wiederverwendung als Spritzmedium ohne besondere Nachbehandlung ermöglicht.

Die Lösung dieser Aufgabe wird nach dem Kennzeichen des Anspruchs 1 erreicht durch eine unterhalb der Niederschlagsfläche liegende und im wesentlichen quer dazu gerichtete Auffangfläche, die unabhängig von der Niederschlagsfläche durch mindestens einen Abstreifer bestreichbar ist.

Diese Ausgestaltung hat den Vorteil, daß die
verschiedenen Bereiche der Vorrichtung im wesentlichen unabhängig voneinander arbeiten
können, so daß sie bedarfsabhängig sowohl
gleichzeitig als auch zeitverschieden betriebsfähig sind. Vorteilhaft ist aber auch, daß sowohl das
von den Niederschlagsflächen abgestreifte als
auch das sich unmittelbar nach unten bewegende
Overspray von der Auffangfläche übernommen
wird, bevor es für die Wieder- bzw. Weiterverwendung abtransportiert wird. Es findet
hierdurch nämlich fortwährend eine Zusammenführung und Vermischung des gesamten Oversprays vor Beginn des eigentlichen Rückführvorgangs statt, so daß sich ein Viskositätsausgliech
zwischen den verschiedenen Overspray-Anteilen
einstellt.

Nach der Erfindung besteht gemäß Anspruch 2
die vorteilhafte Möglichkeit, die Auffangfläche
stationär anzuordnen und den oder die Abstreifer
über diese hinwegbewegbar vorzusehen.

Nach Anspruch 3 ist es gemäß der Erfindung
aber auch möglich, die Auffangfläche relativ zu
ortsfesten Abstreifern bewegbar auszubilden.
Hierbei erweist es sich gemäß Anspruch 4 als
besonders vorteilhaft, wenn die Auffangflächen
aus einem endlosen Band bestehen. Wichtig ist
es erfindungsgemäß aber auch, daß gemäß Anspruch 5 die Auffangfläche in oder oberhalb der
Auffangwanne angeordnet und ihr eine Lösungsmittel-Benetzungsvorrichtung, z. B eine Düsenreihe oder eine Überlaufrinne mit Kammleiste
zugeordnet ist. Es ist hierdurch auf einfache Art
und Weise möglich, die Konsistenz bzw. Viskosität des Oversprays so zu beeinflussen, daß es
unmittelbar wieder als Spritzmedium zum Einsatz
gelangen kann. Um eine möglichst gleichmäßige
Verteilung des Lösungsmittels und eine gute
Vermischung desselben mit den Overspray zu
erhalten, kann schließlich nach Anspruch 6 die
Auffangfläche und/oder die Auffangwanne von
der Lösungsmittel-Benetzungsvorrichtung weg
(unter einem relativ kleinen, von der Waagerechten verschiedenen Winkel) geneigt angeordnet
werden.

Die erfindungsgemäße Ausgestaltung einer
Vorrichtung durch Spritzbehandlung von Gegenständen ist grundsätzlich unabhängig von der
Ausbildung der gleichzeitig vorhandenen, aufrechten Niederschlagsflächen und von deren Zusammenarbeit mit den zugehörigen Abstreifern.
Das heißt, die Niederschlagsflächen können nicht
nur an relativ zu ortsfesten Abstreifern drehbaren
Scheiben oder gegenüber solchen ortsfesten Abstreifern in Vertikalrichtung laufenden, endlosen
Bändern ausgebildet sein, sondern sich auch an
ortsfesten Flächen befinden, gegenüber denen
die Abstreifer in Vertikalrichtung oder auch in
Horizontalrichtung bewegbar sind.

Weitere Merkmale und Vorteile der Erfindung
werden nachfolgend an einem in der Zeichnung dargestellten Ausführungsbeispiel erläutert. Dabei zeigt

Figur 1 in der Seitenansicht eine sowohl aufrecht orientierte Niederschlagsflächen als auch
im wesentlichen waagerecht orientierte Auffangsflächen für Overspray aufweisende Vorrichtung
zur Spritzbehandlung von Gegenständen und

Figur 2 eine Draufsicht auf die Vorrichtung
nach Anspruch 1.

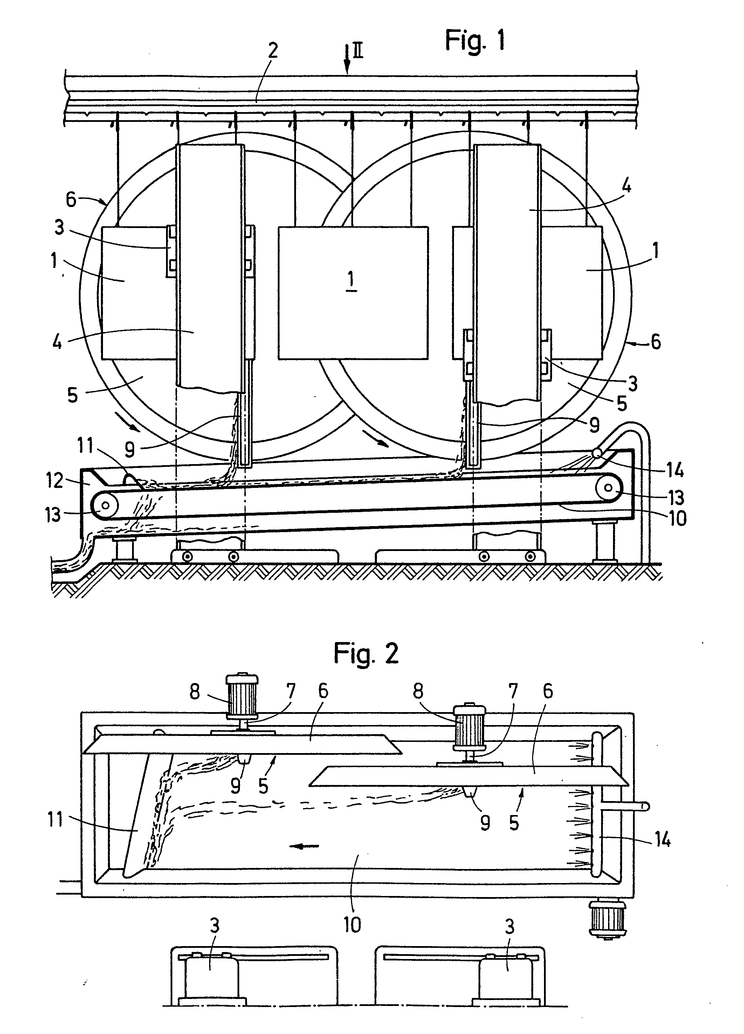

Aus Fig. 1 ergibt sich, daß die durch eine
Spritzbehandlung mit einer Beschichtung zu versehenden Gegenstände 1 längs einer Transportbahn 2, beispielsweise hängend durch eine
Spritzkammer bewegt werden können, in welcher
Spritzvorrichtungen 3 anstatt Tiefen 4 auf und ab
bewegbar geführt werden, welche wiederum in
begrenztem Maße horizontal verfahrbar in der
Spritzkammer vorgesehen sind.

In Spritzrichtung hinter den zu beschichtenden
Gegenständen 1, also an deren den Spritzvorrichtungen 3 abgewendeten Seite, befinden sich in
der Spritzkammer aufrechte, nämlich wenigstens
annähernd senkrecht orientierte, Niederschlagsflächen 5, für das — als sogenantes Overspray —
ungenutzt an den Gegenständen 1 vorbeitretende
Spritzmedium. Dabei sind die Niederschlagsflächen 5 so orientiert und bemessen, daß sie
allseitig über den durch die Spritzvorrichtungen 3
bestreichbaren Bereich genügend weit hinausragen, um auch bei breit streuendem Spritzkegel
der Spritzvorrichtungen 3 noch das Niederschlagen des Oversprays zu ermöglichen.

Beim Ausführungsbeispiel finden sich die Niederschlagsflächen 5 an zwei kreisförmigen Scheiben 6, die fliegend am freien Ende einer horizontal ausgerichteten Welle 7 befestigt sind, die
wiederum drehbar in ortsfesten Lagern 8 gehalten und durch einen (nicht gezeigten) Elektromotor in relativ langsame Drehung versetzt wird. Der
seitliche Abstand zwischen den beiden Wellen 7
wird dabei so gewählt, daß sich die Scheiben 6 in
einer axial versetzten Relativlage zueinander abschnittweise überdecken und hierdurch miteinander eine im wesentlichen langrunde Niederschlagsfläche 5 begrenzen, wie das besonders
deutlich aus Fig. 1 ersichtlich ist.

Den ebenen Niederschlagsflächen 5 jeder
kreisförmigen Scheibe 6 ist ein Abstreifer 9 zugeordnet, der sich im wesentlichen vertikal und
mindestens über die untere Hälfte des Scheibendurchmessers erstreckt. Dabei ist es vorteilhaft, den Abstreifer mit einer der Drehbewegung der Scheibe 6 entgegengerichteten flexiblen Schaberlippe auszustatten, die unter gewisser Vorspannung gegen die Niederschlagsfläche 5 zur Einwirkung kommt.

Mit Hilfe des Abstreifers 9 bzw. der daran
befindlichen Schaberlippe wird das auf der Niederschlagsfläche 5 befindliche Spritzmedium
fortwährend abgestreift, so daß es längs des
Abstreifers 9 nach unten läuft.

Oberhalb des Abstreifers 9 können den Niederschlagsflächen 5 noch Benetzungsvorrichtungen, beispielsweise in Form von Sprühdüsen
oder Überlaufrinnen zugeordnet werden, welche fortwährend oder intermittierend ein flüssiges Medium, beispielsweise ein im Spritzmedium enthaltenes Lösungsmittel, in solcher Menge auf die Niederschlagsflächen 5 bringen, daß der während des Spritzvorgangs aus dem Spritzmedium verflüchtigte Anteil desselben wieder ausgeglichen wird. Hierdurch wird gewährleistet, daß das auf den Niederschlagsflächen 5 als sogenanntes Overspray befindliche Spritzmedium die für das sichere Arbeiten der Abstreifer notwendige Konsistenz bzw. Viskosität behält.

Es sei darauf hingewiesen, daß die Niederschlagsflächen 5 auch an einem vertikal bewegbaren, endlosen Band ausgebildet werden können und sich dabei an einem oder mehreren mit Neigungslage orientierten ortsfesten Abstreifern 9 vorbeibewegt werden können.

Auch besteht die Möglichkeit, die Niederschlagsflächen 5 an einer statinären, im wesentlichen aufrecht orientierten Wand auszubilden, an welcher dann die Abstreifer entweder in Vertikalrichtung oder aber in Horizontalrichtung entlanglaufen.

In jedem Falle ist unterhalb der Niederschlagsfläche 5 liegend und im wesentlichen quer dazu gerichtet eine Auffangfläche 10 vorgesehen, deren Länge auf die Gesamtlänge der Niederschlagsflächen 5 abgestimmt ist und deren Breite so bemessen ist, daß sie mindestens den Abstrand zwischen den Niederschlagsflächen 5 und den Düsenmündungen der Spritzvorrichtungen 3 entspricht.

Die Auffangfläche 10 nimmt dabei nicht nur den durch die Abstreifer 9 von den Niederschlagsflächen 5 entfernten Anteil des Oversprays auf, sondern auch denjenigen Anteil desselben, welcher bereits vor dem Auftreffen auf die Niederschlagsflächen 5 nach unten sinkt.

Die Auffangfläche 10 arbeitet mit einem sich über ihre ganze Breite erstreckenden Abstreifer 11 zusammen und zwar so, daß durch eine Relativbewegung zwischen der Auffangfläche 10 und dem Abstreifer 11 das Overspray von der Auffangfläche 10 in eine diese unterfangende Auffangwanne 12 gelangt, aus welcher es wieder dem Spritzmedien-Kreislauf zugeführt werden kann.

Beim gezeigten Ausführungsbeispiel wird die Auffangfläche 10 von einem endlosen Band gebildet, das innerhalb der Auffangwanne 12 über zwei Umlenkrollen 13 läuft und zwar dergestalt, daß sein Übertrum sich unter dem stationär angeordneten Abstreifer 11 hindruchbewegt. Hierbei befindet sich der Abstreifer 11 in der Nähe des einen Endes der Auffangwanne 12, während am gegenüberliegenden Ende derselben über dem Übertrum des endlosen Bandes eine Düsenreihe 14 als Lösungsmittel-Benetzungsvorrichtung vorgesehen ist. An Stelle der Düsenreihe 14 läßt sich als Lösungsmittel-Benetzungsvorrichtung aber auch eine Überlaufrinne mit Kammleiste vorsehen. In jedem Falle wird über die Lösungsmittel-Benetzungsvorrichtung kontinuierlich oder intermittierend Lösungsmittel in solcher Menge auf das Obertrum des die Auffangfläche 10 bildenden Bandes gebracht, daß das Overspray eine Konsistenz bzw. Viskosität behält, die ein sicheres Zusammenarbeiten des Abstreifers 11 mit der Auffangfläche 10 gewährleistet und gegebenenfalls die unmittelbare Rückführung des Oversprays in den Spritzmedienkreislauf gestattet.

Wichtig für eine gleichmäßige Lösungsmittel-Verteilung über die gesamte Auffangfläche 10 ist es, daß letztere eine von der Lösungsmittel-Benetzungsvorrichtung weg leicht nach abwärts, also gegen die Horizontale geneigte Lage einnimmt und das vorteilhaft auch die zugeordnete Auffangwanne 12 eine solche Neigungslage hat.

Es sei noch darauf hingewiesen, daß auch die Auffangfläche 10 stationär angeordnet werden kann, während der oder die Abstreifer 11 dann über diese hinweg bewegbar vorgesehen werden.

In allen Fällen ist es jedoch wichtig, daß die Auffangfläche 10 sowie die ihr zugeordneten Abstreifer 11 und Lösungsmittel-Benetzungsvorrichtungen völlig unabhängig von der Niederschlagsfläche 5 und den dieser zugeordneten Aggregaten betriebsfähig ist, so daß, je nach Bedarf, problemlos sowohl ein zeitgleicher als auch ein zeitversetzter Betrieb der beiden Anlagenteile ermöglicht wird. Hierdurch ist nämlich die Möglichkeit geboten, die Rückgewinnung des gesamten Oversprays ohne Benutzung eines Waschsystems zu bewirken und dadurch dessen unmittelbare Rückführung in den Spritzmedienkreislauf zu ermöglichen.

## Ansprüche

1. Vorrichtung zur Spritzbehandlung, insbesondere zur Spritzlackierung, von Gegenständen (1) mit einer sich quer zur Spritzrichtung erstreckenden Niederschlagsfläche (5) für das an den Gegenständen (1) vorbeitretende Spritzmedium (Overspray) mindestens einem Abstreifer (9) zum Entfernen des Niederschlags von der Niederschlagsfläche (5) und einer unterhalb der Niederschlagsfläche angeordneten Auffangwanne (12) für das abgestreifte Spritzmedium, gekennzeichnet durch eine unterhalb der Niederschlagsfläche (5) liegende und im wesentlichen quer dazu gerichtete Auffangfläche (10), die unabhängig von der Niederschlagsfläche (5) durch mindestens einen Abstreifer (11) bestreichbar ist.

2. Vorrichtung nach Anspruch 1, dadurch gekennzeichnet, daß die Auffangfläche (10) stationär angeordnet und der oder die Abstreifer (11) über diese hinweg bewegbar vorgesehen ist bzw. sind.

3. Vorrichtung nach Anspruch 1, dadurch gekennzeichnet, daß die Auffangfläche (10) relativ zu ortsfesten Abstreifern (11) bewegbar vorgesehen ist (Fig. 1 und 2).

4. Vorrichtung nach Anspruch 1 und 3, dadurch gekennzeichnet, daß die Auffangfläche (10) aus einem endlosen Band besteht (Fig. 1 und 2).

5. Vorrichtung nach einem der Ansprüche 1 bis 4, dadurch gekennzeichnet, daß die Auffangfläche (10) in oder oberhalb der Auffangwanne (12) angeordnet und ihr eine Lösungsmittel-Benetzungsvorrichtung (14), z. B. eine Düsenreihe oder eine Überlaufrinne mit Kammleiste, zugeordnet ist (Fig. 1 und 2).

6. Vorrichtung nach einem der Ansprüche 1 bis 5, dadurch gekennzeichnet, daß die Auffangfläche (10) und/oder die Auffangwanne (12) von der Lösungsmittel-Benetzungsvorrichtung (14) weg nach abwärts geneigt angeordnet ist (Fig. 1).

**Claims**

1. A mechanism for spray treatment, in particular spray painting of objects (1), having a deposition area (5) extending transverseley to the spraying direction for the spraying medium (overspray) which passes by the objects (1), at least one stripper (9) for the removal of the deposit from the deposition area (5) and a collecting-trough (12) arranged underneath the deposition area for the spraying medium which is stripped off, characterized by a collecting area (10) which lies underneath the deposition area (5) and is directed essentially transversely to it and which can be wiped off independently of the deposition area (5) by at least one stripper (11).

2. A mechanism as in Claim 1, characterized in that the collecting area (10) is arranged stationnary and the stripper or strippers (11) is/are designed to be movable across it.

3. A mechanism as in Claim 1, characterized in that the collecting area (10) is designed to be movable relative to stationary strippers (11) (Figures 1 and 2).

4. A mechanism as in Claim 1 and 3, characterized in that the collecting area (10) consists of an endless belt (Figures 1 and 2).

5. A mechanism as in one of the Claims 1 to 4, characterized in that the collecting area (10) is arranged in or above the collecting-trough (12) and there is associated with it a solvent-wetting device (14) e.g., a row of nozzles or an overflow gutter with a comb strip (Figures 1 and 2).

6. A mechanism as in one of the Claims 1 to 5, characterized in that the collecting area (10) and/or the collecting-trough (12) is arranged sloping downwards away from the solvent-wetting device (14).

**Revendications**

1. Dispositif de traitement par pulvérisation, notamment pour peindre des objets (1) par pulvérisation, avec une aire de dépôt (5) s'étendant en travers de la direction de la pulvérisation pour recueillir le fluide pulvérisé (2) passant à côté (Overspray) des objets (1), avec au moins une raclette (9) pour ôter le dépôt formé sur l'aire de dépôt (5) et avec, disposé au-dessous de l'aire de dépôt, un bac collecteur (12) pour le fluide pulvérisé ôté par la raclette, caractérisé par une aire de captation (10) qui est située au-dessous de l'aire de dépôt (5), est orientée sensiblement en travers de cette dernière et peut être balayée par au moins une raclette (11) indépendamment de l'aire de dépôt (5).

2. Dispositif selon la revendication 1, caractérisé en ce que l'aire de captation (10) est disposée fixe, la ou les raclettes (11) étant prévue(s) pour être déplacée(s) sur cette aire.

3. Dispositif selon la revendication 1, caractérisé en ce que l'aire de captation (10) est prévue pour être déplacée par rapport à des raclettes (11) fixes (fig. 1 et 2).

4. Dispositif selon la revendication 1 et 3, caractérisé en ce que l'aire de captation (10) est constituée par une bande sans fin (fig. 1 et 2).

5. Dispositif selon une des revendications 1 à 4, caractérisé en ce que l'aire de captation (10) est disposée dans le bac collecteur (12) ou au-dessus de lui, un dispositif (14) de mouillage par solvant, par exemple une rangée de buses ou une rigole à débordement avec barre de seuil, étant affecté à cette aire (fig. 1 et 2).

6. Dispositif selon une des revendications 1 à 5, caractérisé en ce que l'aire de captation (10) et/ou le bac collecteur (12) sont disposés en pente vers le bas à partir du dispositif (14) de mouillage par solvant (fig. 1).

0 081 167

Fig. 1

Fig. 2

1